# EUROPEAN PATENT SPECIFICATION

(11) **EP 3 050 647 B1**
(45) Date of publication and mention of the grant of the patent: **31.10.2018**
(21) Application number: 14847207.9
(22) Date of filing: 25.09.2014
(51) Int. Cl.: B22F 3/10, B22F 1/00, B22F 3/02, B23D 61/14, B23D 65/00, B27B 5/29, B27B 33/06, C22C 1/05, C22C 19/07, C22C 29/08, C22C 32/00, B22F 3/22, B23D 61/12, C22C 1/04, B22F 5/00

(54) **METHOD FOR PRODUCING COBALT ALLOY MATERIAL, COBALT ALLOY MATERIAL AND CUTTING MEMBER**
VERFAHREN ZUR HERSTELLUNG EINER KOBALTLEGIERUNG, KOBALTLEGIERUNG UND SCHNEIDELEMENT
PROCÉDÉ DE FABRICATION D'UN MATÉRIAU EN ALLIAGE DE COBALT, MATÉRIAU EN ALLIAGE DE COBALT ET ÉLÉMENT DE COUPE

(30) Priority: 25.09.2013 JP 2013198949
(43) Date of publication of application: 03.08.2016
(73) Proprietor: Shimane Prefectural Government, Matsue-shi, Shimane 690-8501 (JP); Iwasaki Saw Filing Corporation, Ohda-shi, Shimane 694-0064 (JP)
(72) Inventor: TAKIYAMA, Naoyuki, Matsue-shi Shimane 690-0816 (JP); IWASAKI, Yoshihiro, Ohda-shi Shimane 694-0064 (JP)
(74) Representative: Lampis, Marco
(86) International application number: PCT/JP2014/004924
(87) International publication number: WO 2015/045399

(56) References cited:
- WO-A1-2004/085099
- JP-A- H0 196 350
- JP-A- S6 453 797
- JP-A- S51 149 809
- JP-A- S51 149 809
- JP-A- 2001 123 238
- JP-A- 2006 521 472
- JP-A- 2010 222 661
- JP-B1- 5 189 222
- US-B1- 6 479 014

## Description

### Technical Field

The present invention relates to a method for producing a cobalt alloy material, a cobalt alloy material that is produced by the method, and a cutting member made from the cobalt alloy material.

### Background Art

A cobalt alloy is excellent in mechanical properties and the like, such as hardness, abrasion resistance and heat resistance. A cobalt alloy or a cobalt alloy material containing the cobalt alloy as a main raw material is, from the difficulty of machining, generally made into a shape close to a completed product from the start by casting and is subjected to polish finishing.

In addition, there is a metal powder injection molding method as a method of being made into a shape close to a completed product from the start. The metal powder injection molding method is a method in which a kneaded body of raw material metal powder and a binder is injected into a die and is molded, and the molded body that is obtained in this way is in many cases sintered after removing the binder. For example, in Patent Literature 1, a method of manufacturing hard metal alloy by injection molding using 90 weight% of WC powder and 10 weight% of cobalt powder as raw material powders is disclosed. In the method, a kneaded body obtained by adding a binder to these raw material powders is injected into a die and is molded to thereby give a molded body, and the molded body is held at 450°C for 2 hours as a treatment for removing the binder, and, after that, is held at 1400°C for 2 hours to thereby give a sintered body.

Furthermore, Patent Literature 2 discloses production of a cutting tip for a saw for wood cutting by injection molding and sintering while using high-speed steel powder as a raw material, that is, by a metal powder injection molding method.

### Citation List

### Patent Literature

PTL 1: Japanese Patent Laid-Open No. H07-34154(1995)
PTL 2: Japanese Patent Laid-Open No. 2010-234497
PTL 3: Japanese Patent No. 4427811

US6479014 discloses a saw blade tips and alloys therefor.

### Summary of Invention

### Technical Problem

In a way similar to the above-described molded body in which a high-percentage WC and cobalt are used as raw materials, a molded body containing a relatively high percentage of cobalt also requires high sintering temperature, namely, sintering at high temperature of, for example, 1350°C. The sintering at such high temperature requires a sintering apparatus that can withstand the high temperature, and in addition, requires a large energy, and has problems from the viewpoint of equipment cost and energy consumption.

Accordingly, an object of the present invention is to produce a cobalt alloy material at a relatively low sintering temperature.

Furthermore, the present invention aims at providing a cutting member such as a cutting tip, which is made from such a cobalt alloy material.
A method is claimed in claim 1 according the present invention.

### Solution to Problem

The present inventors have found, as a result of creative ingenuity and various investigations, that sintering temperature of a molded body can relatively be lowered by adding boron-based powder and/or incorporating a boron ingredient to cobalt-based powder as a raw material, to thereby achieve the present invention.

According to an aspect of the present invention, there is provided a method for producing a cobalt alloy material, including the steps of: making a molded body by using raw material powder that includes cobalt-based powder and includes boron in an amount of 0.01 to 1.00 mass% based on the total mass of the raw material powders; and sintering the molded body.

Preferably, the cobalt-based powder is powder of a cobalt alloy, that is, a powdery cobalt alloy. Preferably, raw material powder contains boron-based powder in an amount corresponding to from 0.01 to 1.00 mass% of boron, based on the total mass of the raw material powders. Furthermore, preferably, a powdery cobalt alloy contains 28.00 to 32.00 mass% of chromium, 3.50 to 13.00 mass% of tungsten, and 1.00 to 4.70 mass% of carbon, based on the total mass of the powdery cobalt alloy. In an embodiment, a powdery cobalt alloy contains 28.00 to 32.00 mass% of chromium, 3.50 to 5.00 mass% of tungsten, and from 1.00 to 1.40 mass% of carbon, based on the total mass of the powdery cobalt alloy. Raw material powder contains WC powder 0 to 70%, not including 0, of tungsten in raw material powder may be contained as WC powder in the raw material powder. Furthermore, raw material powder may contain carbon powder. For example, 0.01 to 3.70 mass% of carbon, more preferably 0.10 to 3.70 mass% of carbon may be contained as carbon powder in raw material powder, based on the total mass of the raw material powders.

The powdery cobalt alloy may contain a boron ingredient (that is, in a powdery cobalt alloy, boron may be alloyed). In this case, the powdery cobalt alloy can contain a boron ingredient in an amount of 0.01 to 1.00 mass%, preferably in an amount of 0.05 to 0.30 mass%, more preferably in about 0.20 mass%, based on the total mass of the powdery cobalt alloy. In this case, furthermore, boron-based powder can also be added, but the addition is not necessarily required.

Preferably, the step of making a molded body in the above-described method favorably may include the steps of: making a kneaded body containing raw material powder and a binder, and making a molded body by injection-molding the kneaded body. Furthermore, the method can include the step of removing the binder from the molded body. The above-described sintering step favorably follows after the removing step.

Furthermore, the present disclosure also relates to a cobalt alloy material produced by the method. The present disclosure also relates to a cutting member, in which at least one cutting edge is formed on the cobalt alloy material. Furthermore, the present disclosure also relates to a saw for wood cutting provided with the cutting member and a main body member to which the cutting member is attached. Advantageous Effects of Invention

According to an aspect of the present invention having the above-described configuration, since 0.01 to 1.00 mass% of boron is contained in raw material powder based on the total mass of the raw material powders, sintering temperature of a molded body can be lowered with the boron addition.

### Brief Description of Drawings

Fig. 1 is a diagram showing the composition of usable cobalt alloys;
Fig. 2 is a block diagram showing the production process of the cobalt alloy material according to an embodiment of the present invention;
Fig. 3 is a drawing showing a part of the saw according to an embodiment of the present invention;
Fig. 4 is a partial cross-sectional view along the IV - IV line in Fig. 3;
Fig. 5 is an enlarged view of a part of the saw in Fig. 3, which is a drawing that schematically shows the cross-section of a cutting tip attached to a tooth form part, along the V - V line in Fig. 4;
Fig. 6 is a perspective view of a part of the saw in Fig. 3, and is a drawing showing a state that the cutting tip has left from a sawtooth plate;
Fig. 7 is a diagram showing the composition of cobalt alloy powder used in an experiment;
Fig. 8 is a graph showing experimental results;
Fig. 9 is a graph showing experimental results;
Fig. 10 is a graph showing experimental results;
Fig. 11 is a graph showing experimental results;
Fig. 12 is a composition photograph of a comparative material;
Fig. 13 is a composition photograph of a material according to Example of the present invention;
Fig. 14 is a diagram showing raw material percentages, sintering conditions and mechanical properties of experimental materials;
Fig. 15 is a diagram showing raw material percentages, spreading limit values and abrasion properties of experimental materials;
Fig. 16 is a drawing for explaining a spreading test;
Fig. 17 is a drawing for explaining an abrasion test;
Fig. 18 is a graph showing experimental results;
Fig. 19 is a diagram showing the relationship between additive percentage and mechanical properties of experimental materials;
Fig. 20 is a graph showing experimental results; and
Fig. 21 is a diagram showing mechanical properties of experimental materials.

### Description of Embodiments

Hereinafter, embodiments of the present invention will be explained.

### (Cobalt alloy material)

The present disclosure is directed to a cobalt alloy material produced using a cobalt-based material as a raw material. In the present description, materials produced using a cobalt alloy as a raw material among cobalt-based materials are generally referred to as cobalt alloy materials, but other materials are not intended to be excluded. In particular, the present invention is directed to cobalt alloy materials containing boron, in other words, cobalt alloy materials produced with a raw material containing boron.

In an embodiment, powder of a cobalt alloy (powdery cobalt alloy) and boron powder are used as a raw material powder. Various types of powder can be used as a raw material powder.

Various cobalt alloys can be used as a cobalt alloy as a raw material. A cobalt alloy containing chromium (Cr), tungsten (W) and carbon (C) can be used as a raw material. For example, a cobalt alloy that contains 28.00 to 32.00 mass% of chromium; 3.50 to 13.00 mass% of tungsten, more preferably 4.00 to 13.00 mass% of tungsten; and 1.00 to 4.70 mass% of carbon based on the total mass of the cobalt alloy (in the case where referred to as 100 mass%) is favorably used. Furthermore, a cobalt alloy in which, in the case where denoting the total mass of the cobalt alloy by 100 mass% (100 parts by weight), 90 mass% or more thereof consists of chromium, tungsten, carbon and cobalt (Co) can be used as a raw material. The cobalt alloy favorably contains 28.00 to 32.00 mass% of chromium; 3.50 to 13.00 mass% of tungsten, more preferably 4.00 to 13.00 mass% of tungsten; 1.00 to 4.70 mass% of carbon, preferably 1.00 to 1.40 mass% of carbon, and more preferably 1.00 to 1.30 mass% of carbon, based on the total mass of the cobalt alloy. Furthermore, a cobalt alloy in which 85 mass% or more thereof consists of chromium, tungsten and cobalt, in the case where denoting the total mass of the cobalt alloy by 100 mass%, can be used as a raw material. The cobalt alloy favorably contains 28.00 to 32.00 mass% of chromium; 3.50 to 13.00 mass% of tungsten, more preferably 4.00 to 13.00 mass% of tungsten, based on the total mass of the cobalt alloy. These are simply exemplifications, and the percentage of these ingredients in the cobalt alloy can be arbitrarily set. The present invention broadly recognizes the composition of a cobalt alloy as a raw material, and arbitrary alloy containing cobalt (ingredient) as the primarily main ingredient can be used as a cobalt alloy. The term "the primarily main ingredient" means the most abundant ingredient, and, here, can be determined based on mass%. Preferably, the cobalt alloy favorably contains cobalt in an amount of more than 50 mass%, for example, in an amount of at least 51 mass% based on the total mass of the cobalt alloy. Note that, in the present description, the expression of "from Xa to Xb mass%" is intended to include Xa mass% and Xb mass%, unless otherwise noted in particular.

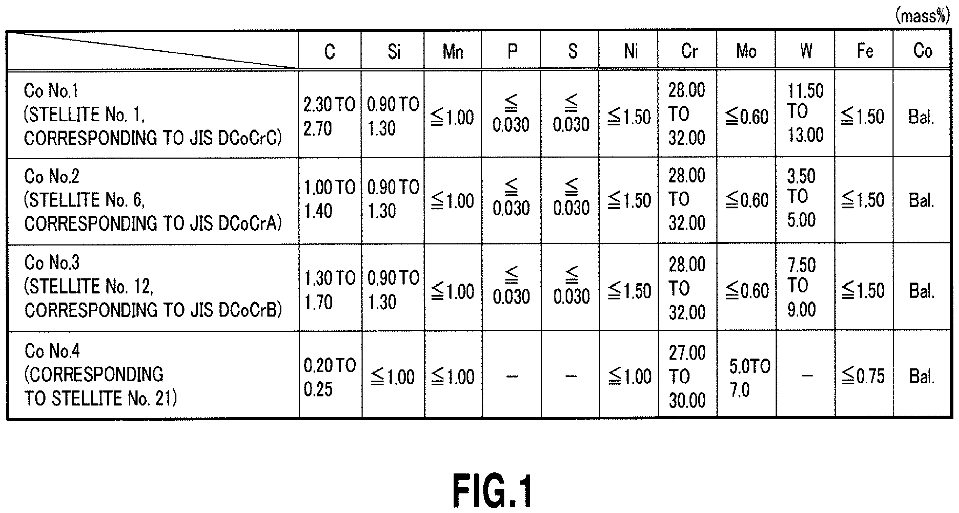

Cobalt alloys having compositions of Co No. 1, Co No. 2, Co No. 3, Co No. 4 that are shown in the diagram (that is, Table) in Fig. 1 can be used as raw materials. Furthermore, as cobalt alloys, there are Stellite (registered trademark) series, and for example, Stellite Nos. 1 to 12, No. 21, and particularly Stellite No. 6 can be used as raw materials. Cobalt alloys of Co No. 1, Co No. 2, Co No. 3 and Co No. 4 correspond, respectively, to Stellite No. 1, No. 6, No. 12, and No. 21. Note that the cobalt alloy of Co No. 2 in Fig. 1 contains 28.00 to 32.00 mass% of chromium (Cr), 3.50 to 5.00 mass% of tungsten (W) and 1.00 to 1.40 mass% of carbon (C), based on the total mass of the cobalt alloy.

Such powder of the cobalt alloy may be prepared in a powdery state by various known methods. For example, a powdery cobalt alloy obtained by atomization may be used.

Boron powder usable in the embodiment is powder of pure boron (B). However, various borides may be used as a raw material in place of boron powder, or together with it. Boron-based materials include boron (B), boron carbide (B₄C), titanium boride (TiB₂), boron nitride (BN), tungsten boride (WB), molybdenum boride (MoB) and the like, and these can be used, respectively, as a raw material. As a boron-based material, one, at least one, or arbitrary combination selected from the group consisting of boron, boron carbide, titanium boride, boron nitride, tungsten boride and molybdenum boride is favorably used. The boron-based material is also used in a powdery state, in the case of a raw material. Hereinafter, powdery boron-based materials may be referred to as boron-based powder.

Note that boron-based powder such as boron powder may not always be used as a raw material. In particular, in the case where a cobalt alloy used as a raw material contains a boron (B) ingredient, boron-based powder may not be used. In this case, a cobalt alloy favorably contains 0.01 to 1.00 mass% of boron based on the total mass of the raw material powders. Note that the present invention allows the use of boron-based powder as raw material powder together with powder of a cobalt alloy containing a boron ingredient (that is, the boron ingredient is alloyed).

Furthermore, tungsten carbide (WC) is used as a raw material. WC is used for enhancing mechanical strength, such as hardness and abrasion resistance. WC is also used in a powdery state. Hereinafter, powdery WC will be referred to as WC powder.

In addition, carbon (C) powder can be used as a raw material. Specifically, so-called carbon black, that is, graphite powder can be used as carbon powder. Carbon powder is not indispensable, but it can be used for enhancing mechanical properties, such as hardness. WC powder and carbon powder can also be used together as raw material powder. Note that carbon powder is advantageous from the viewpoint of cost.

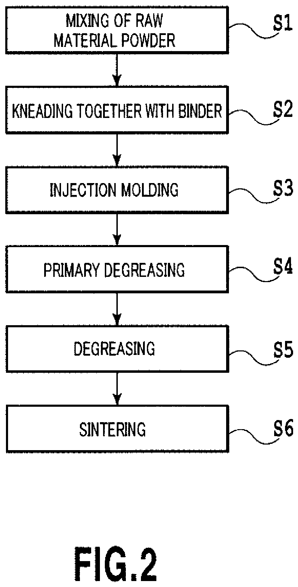

The production of a cobalt alloy material using such raw material powders will be explained on the basis of Fig. 2.

First, in Step S1, prepared raw material powders are mixed. In the embodiment, as described above, a powdery cobalt alloy, that is, a cobalt alloy powder and a boron powder (powder of pure boron) are prepared as raw material powders, and are mixed. The WC powder is mixed with other raw material powders in the Step S1. Furthermore, in the case where a carbon powder is used, the carbon powder is mixed with other raw material powders in a similar way in this step. In this way, the raw material powders are mixed together. Note that the raw material powders may be mixed at once, or may be mixed in a prescribed order . The mixing of the raw material powders can be performed by using various apparatuses, for example, by using a ball mill. For example, these raw material powders are mixed with each other by using a ball mill, for a prescribed time (for example, 20 to 30 minutes, further several hours). Note that, in the case where a raw material consists only of powder of a cobalt alloy having a boron ingredient, Step S1 can be omitted, or Step S1 may be performed in order to further promote pulverization of the raw material.

In an embodiment, the boron powder may be added in 0.16 mass% based on the total mass of the raw material powders. Note that the amount of boron is favorably determined in comprehensive consideration of sintering temperature, sintering time and a range of sintering temperature, to be described later. Boron-based powders such as a boron powder are favorably mixed in a prescribed amount that corresponds to 0.01 to 1.00 mass% of boron based on the total mass of the raw material powders. Preferably, the boron-based powder is mixed in a prescribed amount that corresponds to 0.01 to 0.50 mass%, preferably 0.10 to 0.50 mass%, more preferably 0.10 to 0.30 mass% of boron based on the total mass of the raw material powders . Note that a raw material powder favorably contains 0.01 to 1.00 mass% of boron based on the total mass of the raw material powders, and the boron may be present as boron in a powdery cobalt alloy, or may be present as boron in a boron-based powder.

Furthermore, 0 to 70% not including of tungsten in raw material powder is contained in the raw material powder as a WC powder. However, a cobalt alloy material to be finally obtained contains favorably 3.50 to 67.00 mass%, preferably 4.00 to 67.00 mass% of tungsten based on the total mass of the cobalt alloy material. Note that, in the case where a cobalt alloy material is used for a cutting tip for a saw, the addition amount of WC powder is favorably 20.00 mass% or less based on the total mass of the raw material powders, in consideration of mechanical properties.

Moreover, 0.01 to 3.70 mass% of carbon based on the total mass of the raw material powders is favorably added as a carbon powder, in consideration of mechanical properties. The addition amount of the carbon powder may be 0.10 or more, for example, 1.00 mass% to 3.70 mass%. However, in this case, preferably, a cobalt alloy material that is to be finally obtained contains favorably 1 to 4.7 mass% of carbon based on the total mass of the cobalt alloy material.

In next Step S2, a binder is added to the mixed raw material powder obtained in Step S1, and then an obtained mixture is kneaded. Consequently, a kneaded body having the raw material powder and the binder is obtained. As the binder, various thermoplastic resins can be used. For example, polypropylene, or polyethylene such as HDPE and LDPE may be used as the binder. Note that, additionally, paraffin wax may be used as a binder in order to enhance flowability or slipperiness. Note that, here, hereinafter the paraffin wax will be described as classified in the binder, but it may not always be handled as the binder but may be handled as wax that is different from the binder. Favorably, the addition amount of the binder is from 35 to 60 vol %, preferably about 40 vol % based on the total volume of the raw material powder and the binder. The kneading is performed under temperature atmospheres that are suitable for the flowability of the binder. The kneading can be performed, for example, in the case where polypropylene is used as the binder, at from 145°C to 160°C, preferably at about 150°C. Note that, for the flowability, fatty acid such as stearic acid or metallic soap such as stearate may be added.

Here, Step S1 and Step S2 are explained as a separate step. However, these steps may not be definitely separated. Alternatively, a part of Step S2 may be included in Step S1. For example, the paraffin wax may be mixed into the raw material powder in Step S1, for example, in midcourse thereof.

In next Step S3, the kneaded body obtained in Step S2 is injected into a die to be molded. Consequently, a molded body (first molded body) can be obtained. The kneaded body is favorably maintained at a temperature at the time of kneading (for example, 150°C) or higher until just before the injection molding. The die is favorably maintained, for example, at 50°C. Note that the die can be configured in a die having a shape that corresponds to a cutting tip to be described later.

In next Step S4, primary degreasing is performed on the first molded body obtained in Step S3. The primary degreasing is performed using a solvent such as hexane. The first molded body is favorably washed with hexane at ordinary temperature to approximately 50°C. Note that this Step S4 can be omitted. Alternatively, as this Step S4, the first molded body obtained in Step S3 may be simply placed under reduced-pressure atmospheres for a prescribed time.

Next, in Step S5, degreasing is performed. The degreasing is performed by placing the first molded body having passed or not passed through Step S4, in a furnace under reduced-pressure atmospheres, and heating it at a prescribed temperature for a prescribed time. The inside of the furnace can be set to be a state under a reduced-pressure and a state in which a prescribed amount (for example, 4 L/min) of nitrogen gas is continuously flown. At this time, it is effective to raise temperature by stages according to the kind of a binder that is used. In the case where paraffin wax and polypropylene are used as a binder, firstly, the temperature inside the furnace is raised up to 130°C and kept for prescribed time (for example, 10 minutes). Consequently, the removal of the paraffin wax in the first molded body in the furnace is promoted. After that, the temperature inside the furnace is raised up to from 400°C to 420°C and kept for prescribed time (for example, 60 minutes). Consequently, the removal of polypropylene is prompted. Note that the inside of the furnace may not be under nitrogen gas atmosphere, but may be under an inert gas atmosphere such as an Ar gas atmosphere. Alternatively, the inside of the furnace may simply be made into a reduced-pressure state such as a vacuum (or partial vacuum). Furthermore, the temperate inside the furnace and prescribed time are favorably set according to the kind of binder used, wall thickness of the first molded body and the like. Note that Step S5 may be combined into next Step S6. In such a case, Step S5 is included in Step S6.

Then, in next Step S6, sintering is performed on the molded body having gone thorough Step S5 (second molded body). The sintering is performed in a furnace of a nitrogen gas atmosphere, an inert gas atmosphere or a vacuum (reduced-pressure atmospheres), an ordinary pressure or pressurized atmosphere, or an atmosphere obtained by combining these. The sintering of the second molded body is favorably performed, for example, at temperature of 1200°C to 1300°C, preferably 1210°C to 1290°C for prescribed time (for example, from 8 minutes to 120 minutes) . The second molded body may be placed in the furnace without being pressurized during the sintering. However, the second molded body may be pressurized during the sintering. Then, after the sintering, the sintered second molded body, that is, a sintered body is cooled in the furnace. However, after the sintering, the sintered body may be subjected to quick cooling or pressurized quick cooling. In this way, a cobalt alloy material as a sintered body is obtained.

In this way, the cobalt alloy material according to the embodiment of the present invention can be produced by a metal powder injection molding (MIM) method including: a kneaded body producing step; an injection molding step; and a sintering step. Note that the kneaded body producing step and the injection molding step may be combined into the molding step (a step for making a molded body).

However, the cobalt alloy material may be produced by another method. The cobalt alloy material may be produced by a general common technique of powder metallurgy. For example, the production may simply be performed by following two steps. First, the raw material powder is filled up in a die wihtout using injection molding technique, and is pressurized to thereby give a molded body (molding step). Next, the molded body is sintered (sintering step). In this way, the cobalt alloy material as a sintered body may be obtained. Note that, from the viewpoint of shape stability, relative density and the like of a product, the production of the cobalt alloy material by the metal powder injection molding method explained on the basis of Fig. 2, is preferred.

A cutting tip made of the cobalt alloy material will be explained below.

### (Cutting tip for saw for wood cutting)

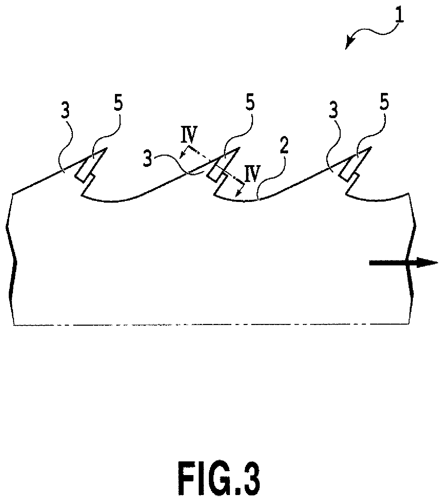

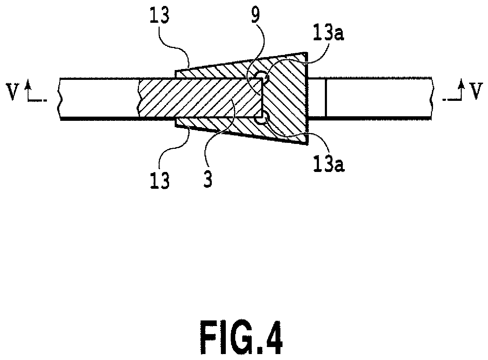

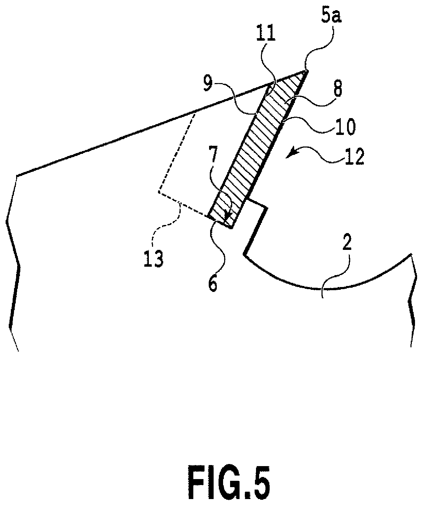

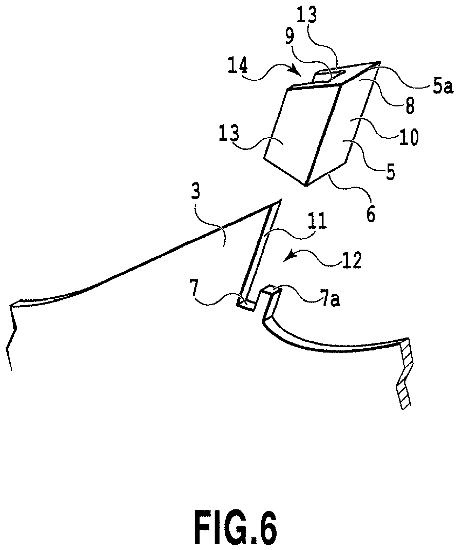

The cutting tip (cutting member) for a saw for wood cutting according to an embodiment of the present disclosure and a saw to which the tip is attached will be explained on the basis of Figs. 3 to 6. Note that the cutting tip and the saw for wood cutting to which the tip is detachably attached to be explained here might correspond to the tip and the tip saw which are described in Patent Literature 3.

In Fig. 3, a part of a saw 1 that is a band saw for lumber sawing is shown. The saw 1 being a cutting tool includes (i) a saw-tooth plate 2 (as a main body member) obtained by forming a plate band member made of steel into an endless band state and (ii) a cutting tip 5 (being a cutting member) that is to be detachably attached to a tooth form part 3 of the saw-tooth plate 2. The cutting tip 5 is configured as a blade edge body, that is, as an independent member. The saw 1 cuts a work material such as wood by the saw wound between a drive wheel and a driven wheel not shown in the drawing, being rotationally driven toward the cutting direction shown by an arrow in Fig. 3.

The tooth form part 3 is formed on a side edge part of the saw-tooth plate 2, being arranged with a prescribed tooth pitch. As shown in the drawing, the tooth form part 3 has a bottom part-receiving part 7 having a concave shape that receives a bottom part 6 of the cutting tip 5, and a blade part-receiving face 11 that supports a back face 9 of a blade part 8 of the cutting tip 5 so that the blade part 8 has a rake face 10 having a prescribed side rake angle, and an attaching part 12 is formed with these parts provided. Note that a front part of the bottom part-receiving part 7 in the cutting direction is formed by partitioned with a protruding part 7a, the protruding part being formed so as to protrude from the saw-tooth plate 2.

The cutting tip 5 has the blade part 8 having thickness and height that are suited to the bottom part-receiving part 7 and the blade part-receiving face 11 that are formed at the tooth form part 3. The cutting tip 5 further has a fitting groove 14 in a concave groove shape that is formed by extending tongue-shaped joint pieces (holding pieces) 13 from both sides of the blade part 8. In the case where the cutting tip 5 is attached to the tooth form part 3, the holding piece 13 is arranged so as to extend toward a direction opposing to the cutting direction. Note that, at a corner of the fitting groove 14 that is a connecting site of the holding piece 13 with the blade part 8, an escape space part 13a is formed to prevent stress concentration so as to ensure good fitting between the cutting tip 5 and the tooth form part 3. The cutting tip 5 having such a shape is set up on the tooth form part 3 so that the bottom part 6 thereof is fitted to the bottom part-receiving part 7 of the tooth form part 3, and so that the back face 9 extending in the groove bottom of the fitting groove 14 thereof makes contact with the blade part-receiving face 11. Thus, the tooth form part 3 is inserted into the fitting groove 14 of the cutting tip 5, holding pieces 13 on both sides of the fitting groove 14 press-holds the tooth form part 3, and the bottom part 6 of the blade part 8 is fitted into the bottom part-receiving part 7. Thus, the cutting tip 5 is tightly attached (press-fitted) to the tooth form part 3.

In addition, the width of the fitting groove 14 of the cutting tip 5 is designed so that it can receive the tooth form part 3, tightly without a gap. Furthermore, the bottom part-receiving part 7 is designed so that the bottom part 6 of the blade part 8 is tightly fitted. Accordingly, on the basis of such fitting, the cutting tip 5 is fixed tightly to the tooth form part 3. Therefore, such saw 1 and cutting tip 5 make it possible to omit a brazing work, thereby being excellent from the viewpoint of cost-saving.

Note that the present invention does not exclude the use of adhesion means such as brazing for attaching the cutting tip 5 to the tooth form part 3. However, it is preferred that the cutting tip 5 is attached to the tooth form part 3 by mechanical joining means such as fitting without using such adhesion means. This enables to readily attach and detach the cutting tip 5. Furthermore, either one of or both of the tooth form part 3 and the cutting tip 5 may be configured so that the attachment of the cutting tip 5 to the tooth form part 3 is performed by shrink fit.

The cutting tip 5 is made from the cobalt alloy material. The cutting tip 5 can be made from various cobalt alloy materials, for example, a cobalt alloy material using only cobalt alloy powder and boron-based powder as raw material powder. The cutting tip 5 is made from a cobalt alloy material in which, WC powder and preferably carbon powder is included as a raw material among above-described cobalt alloy materials .

As mentioned above, the cobalt alloy material is obtained by sintering a molded body prepared by injection molding. The die for the injection molding has a shape corresponding to the shape of the cutting tip 5, being designed with shrinkage in mind. Accordingly, a sintered body of the cobalt alloy material can be used as the cutting tip 5 as it is. In other words, the sintered body of the cobalt alloy material itself obtained in Step S6 has a shape or configuration as the cutting tip 5. However, a further step of processing the sintered body after Step S6 (processing step), for example, a polishing work may be applied to the cobalt alloy material. A sintered body of the cobalt alloy material may be provided with a cutting edge 5a, that is, a blade edge after performing polishing.

### (Experiment 1)

### (1-1)-outside the scope of the invention

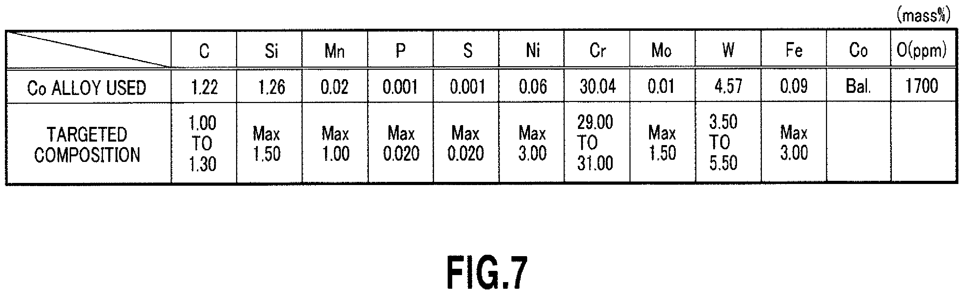

As an experiment 1, the impact of addition of boron-based powder on cobalt alloy powder was evaluated. Fig. 7 shows the composition of a powdery cobalt alloy, that is, cobalt alloy powder used in the experiment. Fig. 7 also shows a targeted composition designed before the analysis of the cobalt alloy powder used in the experiment, and it demonstrates that the cobalt alloy powder used has a composition fallen under the targeted composition. Note that the cobalt alloy composition in Fig. 7 corresponds to Co No. 2 in Fig. 1, that is, Stellite No. 6. Furthermore, the average particle diameter of the cobalt alloy powder used was 8.12 µm. Moreover, in the experiment 1, boron (B) powder manufactured by RARE METALLIC Co., LTD. was used as boron-based powder. The average particle diameter of the boron-based powder used, in particular, in this experiment, the boron powder, was 0.8 µm.

These cobalt alloy powder and boron powder were used as raw materials. With polypropylene as a binder, a kneaded body was produced at about 150°C, and the resultant kneaded body was injected into a die to be molded. Furthermore, the obtained molded body was heated and degreased as described above, and was sintered at each of prescribed temperatures for 10 minutes. Then, relative densities [= (measured density/theoretical density) × 100] thereof were evaluated.

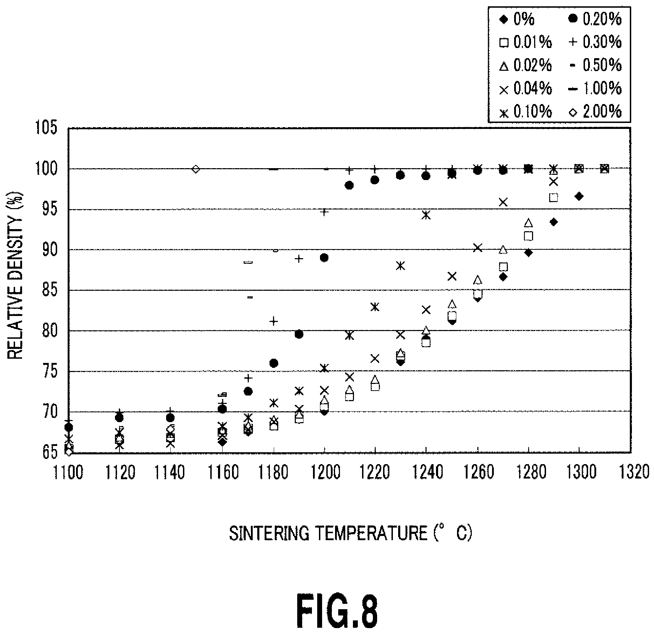

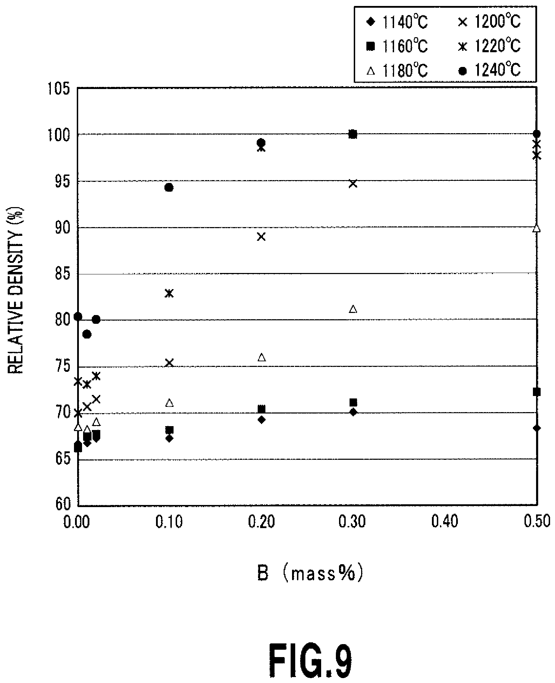

Fig. 8 demonstrates, while plotting sintering temperature (°C) parameter on the horizontal axis and plotting relative density (%) parameter on the vertical axis, the relationship between the addition amount (mass%) of the boron powder and these parameters. Furthermore, Fig. 9 demonstrates, while plotting the boron addition amount (mass%) parameter on the horizontal axis and plotting the relative density (%) parameter on the vertical axis, the relationship between the sintering temperature (°C) and these parameters. The boron addition amount in Figs. 8 and 9 represents mass percentage of the boron powder based on the total mass of the raw material powders [{mass of boron powder/(total mass of cobalt alloy powder and boron powder)} × 100]. Note that "0%" in Fig. 8 represents a cobalt alloy material produced with a cobalt alloy powder alone as raw material powder, that is, a comparative material.

These relationships generally shows that, as the addition amount of boron increases, a higher relative density is obtained at lower sintering temperatures. In particular, as the addition amount of boron increases, the sintering temperature at which the relative density reaches approximately 100% (including 100%) lowers. It was clearly observed that the sintering temperature at which the relative density becomes approximately 100% lowers by adding boron in 0.01 mass%, when compared with a case of no addition of boron. This lowering of sintering temperature at which the relative density becomes approximately 100% as described above is noticeable in the case where the boron addition amount is 0.10 mass% or more. Note that "the relative density of approximately 100%" means, herein, relative densities exceeding 98.0%, in consideration of measurement accuracy.

In the case of no addition of boron, sintering temperature of 1310°C was necessary in order to obtain a cobalt alloy material having a relative density of approximately 100% from the cobalt alloy powder in Fig. 7. Although cobalt alloy materials without addition of boron were produced at sintering temperatures of 1320°C or higher, relative densities of approximately 100% was not obtained. As described above, in order to obtain cobalt alloy materials having relative densities of approximately 100% by using cobalt alloy powder as a raw material with no addition of boron, higher sintering temperature was necessary and the range of such temperature was narrow.

In contrast, cobalt alloy materials of relative densities of 100% (invented materials) were able to be produced, respectively, at a sintering temperature of 1300°C to 1310°C in the case where the boron addition amount was 0.01 mass%, at a sintering temperature of 1280°C to 1310°C in the case where the boron addition amount was 0.04 mass%, and at a sintering temperature of 1250°C to 1290°C in the case where the boron addition amount was 0.10 mass%. In the case where the boron addition amount was 0.20 mass%, cobalt alloy materials of relative densities of approximately 100% (including 100%) (invented materials) were able to be produced at a sintering temperature of 1220°C or higher, in particular of 1230°C to 1280°C. In a similar way, in the case where the boron addition amount was 0.30 mass%, cobalt alloy materials of relative densities of approximately 100% (including 100%) (invented materials) were able to be produced at a sintering temperature of from 1210°C to 1270°C. Furthermore, in the case where the boron addition amount was 1.00 mass%, a cobalt alloy material of relative density of 100% (invented materials) was able to be produced at a sintering temperature of 1180°C. In the case where a boron powder was added in 2.00 mass%, cobalt alloy materials of relative densities of approximately 100% were also obtained. However, in the cases of boron addition of up to 1.00 mass% as compared with the case where a boron powder was added in 2.00 mass%, cobalt alloy material of higher quality was able to be obtained. Note that, in these temperature ranges in the experiment, the sintering temperature was changed at ten-degrees C intervals.

As described above, it was shown that the addition of boron powder in an amount of 0.01 mass% to 1.00 mass%, in particular from 0.01 to 0.50 mass%, more preferably 0.10 to 0.50 mass%, furthermore preferably 0.10 to 0.30 mass% based on the total mass of the raw material powders lowered the sintering temperature of the molded body.

Furthermore, as described above, it was found that, along with the lowering of the sintering temperature for obtaining a cobalt alloy material of the relative density of 100% with the boron addition, the range of the sintering temperature at which the relative density reaches 100% is expanded. In this way, the boron addition brings about the expansion of the range of sintering temperature at which the relative density reaches 100%. This is advantageous in the case where a plurality of molded bodies is sintered at the same time in one furnace. Generally, a broader furnace readily generates a certain level of temperature difference at different places in one furnace. However, even in the case where the sintering temperature varies, this expansion effect contributes to obtain products of the same quality.

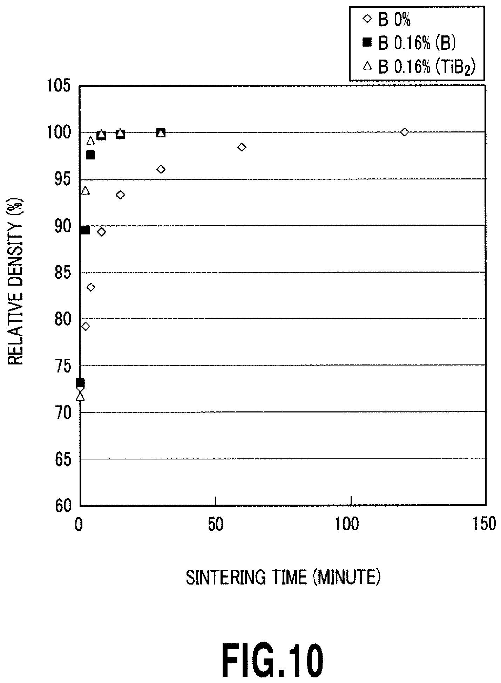

Furthermore, Fig. 10 demonstrates, while plotting the sintering time parameter on the horizontal axis and plotting the relative density parameter on the vertical axis, the relationship between added powders and these parameters. "B 0.16% (B)" in Fig. 10 indicates a cobalt alloy material in which a boron (B) powder is used as boron-based powder and the addition amount thereof is set to be 0.16 mass% based on the total mass of the raw material powders (in this Figure, cobalt alloy powder + boron-based powder). "B 0.16% (TiB₂)" in Fig. 10 indicates a cobalt alloy material in which TiB₂ powder is used as boron-based powder and the amount of the boron ingredient in the TiB₂ powder is set to be 0.16 mass% based on the total mass of the raw material powders. Note that "B 0%" represents a comparative material, and indicates a cobalt alloy material produced using cobalt alloy powder alone as raw material powder, that is, an alloy without boron. Note that, in the experiment in Fig. 10, the sintering temperature was set to be as constant as 1230°C for an alloy obtained by addition of boron-based powder, and was set to be as constant as 1280°C for an alloy without addition of boron.

From Fig. 10, it is understood that, sintering time required for obtaining a cobalt alloy material having a relative density of approximately 100% is shortened by addition of boron-based powder to cobalt alloy powder. In the experiment in Fig. 10, cobalt alloy materials that related to the present invention had relative densities of approximately 100% in the case where the sintering time was 4 minutes or more, in particular 8 minutes or more. In more detail, in the invented materials ("B 0.16% (B)" and "B 0.16% (TiB₂)"), relative densities of approximately 100% were able to be achieved as the result of respective sintering times of 8 minutes, 15 minutes and 30 minutes. In the comparative material ("B 0%"), sintering time exceeding 1 hour was necessary in order to achieve a relative density of approximately 100%.

As described above, sintering temperature for obtaining a cobalt alloy material having a relative density of 100% can be lowered by addition of boron-based powder. Furthermore, sintering time for obtaining a cobalt alloy material having a relative density of 100% can be shortened by addition of boron-based powder. Moreover, the range of sintering temperature for obtaining a cobalt alloy material having a relative density of 100% can be expanded by addition of boron-based powder.

### (1-2)

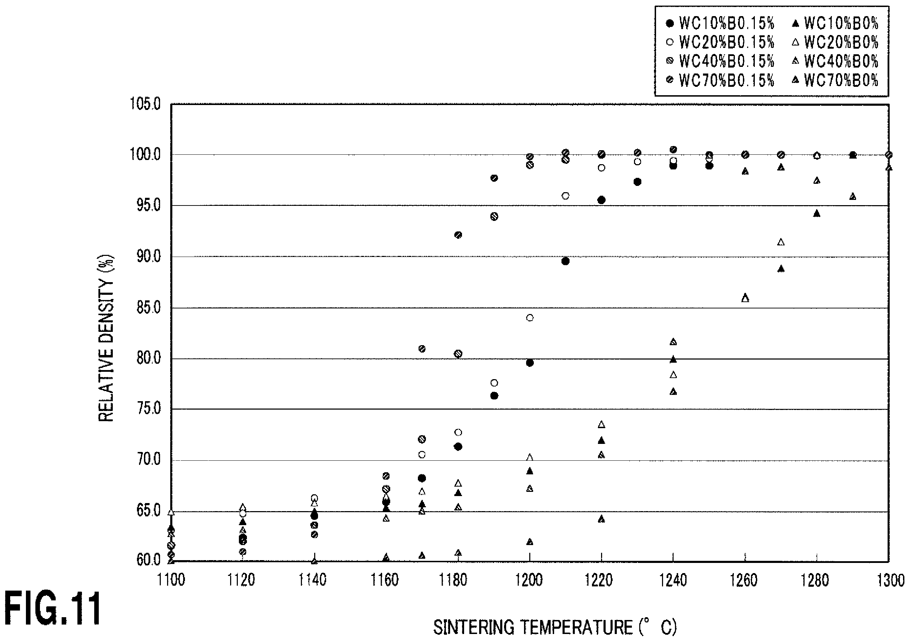

Note that, Fig. 11 demonstrates, the relationship between sintering temperature parameter and relative density parameter of cobalt alloy materials produced with WC powder as one of raw material powders . As can be understood, for example, "WC10%B0.15%" indicates a cobalt alloy material obtained by using, as raw material powders, 10 mass% of a WC powder and 0 .15 mass% of a boron powder based on the total mass of the raw material powders, together with the cobalt alloy powder in Fig. 7. However, in the experiment in Fig. 11, sintering time was set to be as constant as 10 minutes. As can be understood from Fig. 11, even in the case where WC powder is contained in one of raw materials, with addition of boron-based powder, sintering temperature for obtaining a cobalt alloy material having a relative density of approximately 100% can be lowered, and the range of the sintering temperature for obtaining a cobalt alloy material having a relative density of approximately 100% can be expanded. Note that the shortened sintering time for obtaining a cobalt alloy material having a relative density of approximately 100% may also be similarly achieved.

### (1-3) - outside the scope of the invention

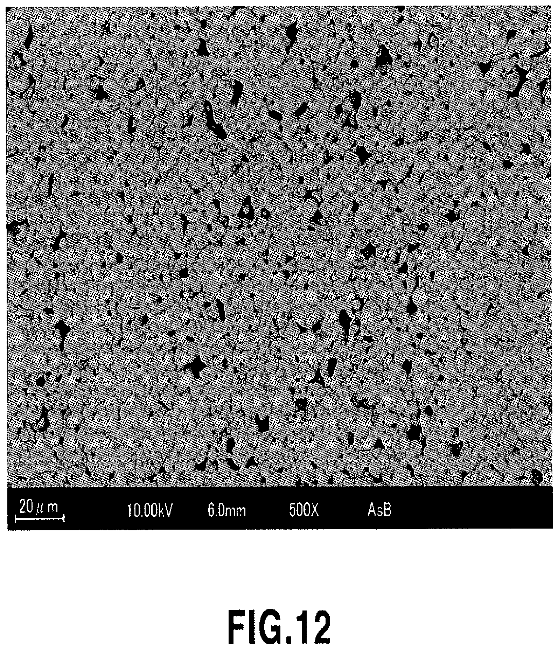

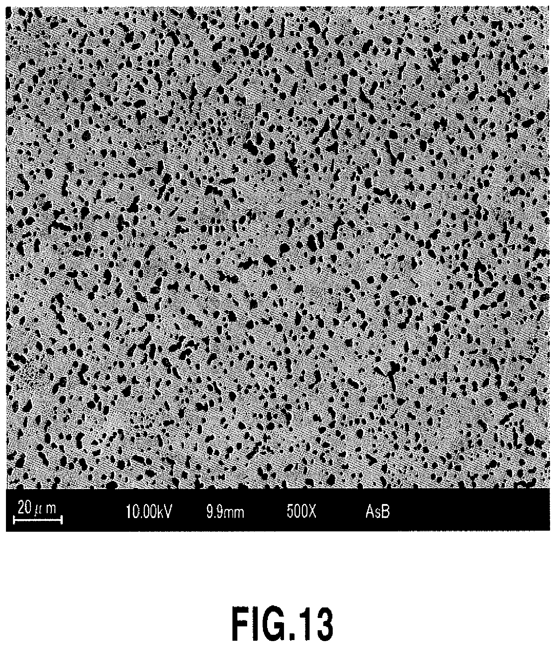

Fig. 12 shows a composition photograph (a photograph taken with a scanning electron microscope) of a cobalt alloy material produced by being sintered at 1220°C without addition of boron-based powder in the experiment 1. Fig. 13 shows a composition photograph (a photograph taken with a scanning electron microscope) of a cobalt alloy material produced by addition of boron powder in 0.20 mass% based on the total mass of the raw material powders in the experiment 1. The sintering temperature of the material in Fig. 13 was 1220°C. However, sintering times of cobalt alloy materials in Figs. 12 and 13 were 10 minutes. Note that, in Fig. 12, most of black portions are voids, and in Fig. 13, most of black portions are carbide.

In Fig. 12, many voids are recognized. In contrast, the cobalt alloy material of the Example, related to the present invention in Fig. 13 does not substantially have a void and has a fine and uniform composition having a particle diameter of about 10 µm or less.

### (Experiment 2)

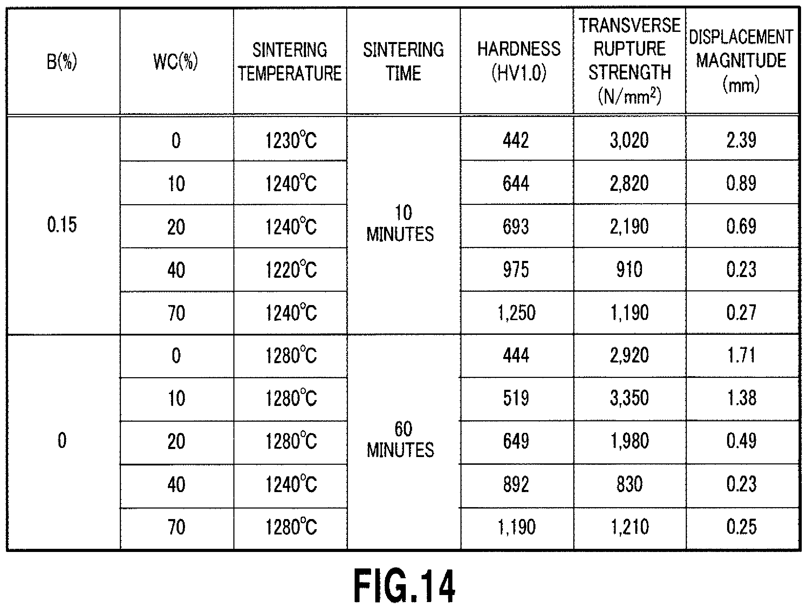

Experiments for evaluating mechanical properties of a cobalt alloy material produced as shown in the experiment 1 were performed. The same cobalt alloy material as that in the experiment 1 was used as a raw material. In the experiment, the addition amount of WC powder was changed in the range shown in Fig. 14. The addition amount of the WC powder (mass%) is shown based on the total mass of the raw material powders. In a cobalt alloy material obtained by adding boron (B) powder in a way similar to the experiment 1, the addition amount was set to be as constant as 0.15 mass% based on the total mass of the raw material powders. Note that the sintering temperature and sintering time are as shown in the diagram in Fig. 14.

Fig. 14 shows hardness (HV1.0), transverse rupture strength (N/mm²) in a transverse rupture test and displacement magnitude (mm) that were measured respectively using the produced cobalt alloy material as a test piece. The hardness is Vickers hardness that was measured with a Vickers hardness meter (see JIS Z 2244). As the transverse rupture test, a three-point flexural test was performed. In the test, a test piece having approximately a width of 4 mm × a thickness of 2 mm × a length of 25 mm was prepared, and the test was performed while setting the distance between fulcrums to be 20 mm. The displacement magnitude is a press-in amount until the test piece was broken, which was measured by autograph.

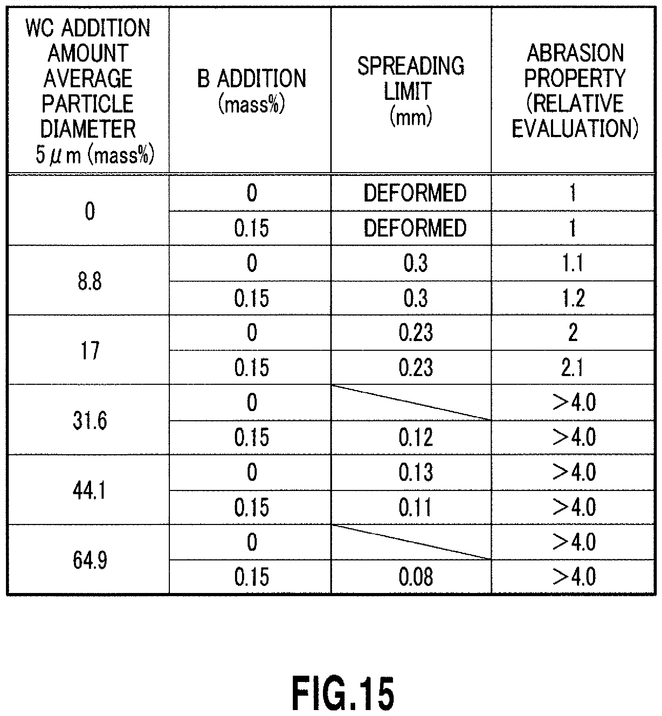

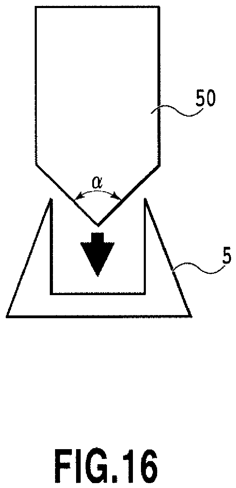

Fig. 15 shows a result of a spreading test (spreading limit value) and abrasion property in the case where the cutting tip 5 was used as a test piece. The spreading test will be explained based on Fig. 16. Fig. 16 shows the cutting tip 5 as a test piece with the fitting groove up, the fitting groove having a concave groove shape. In the experiment, a jig 50 made from hard metal alloy having a tip angle α of 90° was contacted to the cutting tip and impelled in the arrow direction in the drawing. The position at which the jig 50 contacts the cutting tip was set as the zero position, and the press-in depth of the jig made from hard metal alloy when the cutting tip being pressed in was broken was defined as the spreading limit value The measurement was performed by autograph.

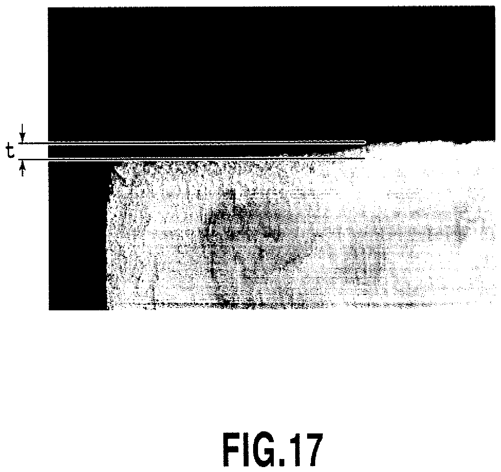

Furthermore, Fig 15 shows abrasion property as a test result evaluated from the relationship between an abrasion amount of the rake face of the cutting tip and processing distance. Fig. 17 shows a photograph of an example of a cutting tip in which the rake face has been abraded. In the experiment, under a constant condition, cutting was performed while contacting a part of the blade tip with a material to be cut, and processed distance when the abrasion amount t shown in Fig. 17 reached 30 µm was evaluated. Furthermore, Fig. 15 shows the test result [travelling distance/(travelling distance of comparative cutting tip)], based on processing distance with a comparative cutting tip that was produced using high-speed tool steel (SKH51). Accordingly, results larger than 1 indicates that travelling distance longer than the travelling distance by using the comparative cutting tip was obtained.

As shown in Fig. 14, the hardness exhibited an improving tendency by addition of boron. On the other hand, regarding the transverse rupture strength and the displacement magnitude in the transverse rapture test, a remarkable impact by addition of boron was not able to be recognized.

Furthermore, as shown in the result of the spreading test in Fig. 15, a cobalt alloy material obtained without addition of WC was deformed without being broken, irrespective of the presence or absence of the boron addition. A material obtained by setting a WC addition amount to be 8.8 mass% exhibited a spreading limit value of 0.3 mm, irrespective of the presence or absence of the boron addition. Furthermore, a material obtained by setting a WC addition amount to be 17.0 mass% exhibited a spreading limit value of 0.23 mm, irrespective of the presence or absence of the boron addition. However, in the case where a WC addition amount was 31.6 mass% or more, the spreading limit value changed according to the addition of boron, and the obtained spreading limit value was 0.13 or less. From the viewpoint of mounting properties of the cutting tip 5 to the tooth form part 3 of the saw 1, the spreading limit value is preferably 0.20 mm or more. Accordingly, in a cutting tip made from a cobalt alloy material, a WC powder addition amount may preferably be 20 mass% or less based on the total amount of the raw material powders.

Furthermore, as shown in Fig. 15, the cobalt alloy material had an improving tendency of abrasion properties thereof along with the increase of the WC addition amount.

### (Experiment 3) - outside the scope of the invention (Experiment 3-1)

In the experiment 3, a material was made in a way similar to the experiment 1. In the experiment 3, the addition amount of boron powder in respective materials was set to be as constant as 0.2 mass%. Note that the definition of the addition amount follows the experiment 1. Boron powder (0.2 mass%) was added to cobalt alloy powder (containing Cr and W) having a composition approximately coincidental with the composition in Fig. 7, and in the experiment 3, carbon black was further added.

While setting the binder that was used and production temperature of a kneaded body to be the same as those in experiment 1, a molded body was obtained by the method similar to experiment 1. The obtained molded body was heated and degreased as described above, which was sintered at each of prescribed temperatures for 10 minutes. Then, relative densities thereof were evaluated.

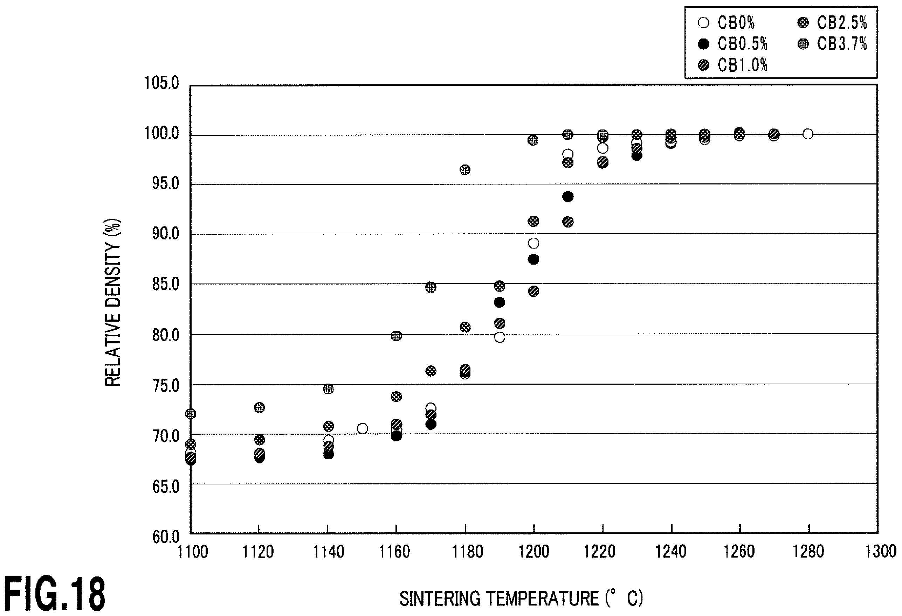

Fig. 18 demonstrates, while plotting sintering temperature (°C) parameter on the horizontal axis and relative density (%) parameter on the vertical axis, the relationship between these parameters. In Fig. 18, a carbon black addition amount is shown as CB%. For example, "CB1. 0%" indicates a cobalt alloy material produced by addition of carbon black powder in 1.0 mass% based on the total mass of the raw material powders. Accordingly, "CB0%" indicates a cobalt alloy material produced without addition of carbon black.

In the experiment, at a sintering temperature of 1220°C or higher, in particular, at a sintering temperature of 1230°C to 1280°C, a cobalt alloy material of relative density of approximately 100% (including 100%) (invented product) was able to be produced from "CB0%" material to which carbon black was not added. This coincides with the experiment 1. Furthermore, cobalt alloy materials of relative densities of approximately 100% (including 100%) (invented product) were able to be produced at a sintering temperature of 1230°C to 1270°C from both "CB0.5%" and "CB1.0%" materials, at a sintering temperature of 1220°C to 1260°C from "CB2.5%" material and at a sintering temperature of 1200°C to 1220°C from "CB3.7%" material. Note that the sintering temperature was changed at ten-degrees C intervals, in the temperature ranges in the experiment.

Even in the case of addition of carbon black as described above, although slightly inferior as compared with the case of no addition of carbon black ("CB0%"), the effect of lowering the sintering temperature of a molded body and expanding a sintering temperature range was able to be achieved in a way simimar to the experiment 1.

### (Experiment 3-2)

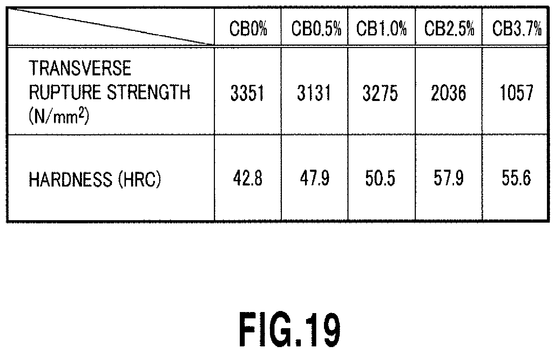

A carbon black-added cobalt alloy material produced in experiment (3-1) had mechanical properties shown in Fig. 19. Among the results in Fig. 19, are those of CB0% to CB2.5% materials were obtained with setting the sintering temperature to be 1220°C , and those of CB3.7% material were obtained with setting the sintering temperature to be 1210°C. The carbon black-added cobalt alloy materials exhibited lowering of the transverse rupture strength in the transverse rupture test explained in the experiment 2, but the hardness thereof (Rockwell hardness (see JIS 2245)) was obviously improved, as compared with a cobalt alloy material obtained by no addition of carbon black ("CB0%").

### (Experiment 4) - outside the scope of the invention

In the experiment 4, in order to supplement the above experiment 1, the relationship between a boron amount (for obtaining approximately 100% relative densities) and sintering temperature was further evaluated. In this experiment, powder of pure cobalt having a purity of 99.9 mass% or higher, and pure boron powder were used as raw material powders. The same technique as that in the experiment 1 was applied to these raw material powders consisting of only cobalt and boron, to thereby give a sintered body.

As a result, in the case of a material produced by setting a targeted composition of boron to be 0.2 mass%, based on the total mass of the raw material powders, a relative density of approximately 100% was able to be achieved when a sintering temperature was 1190°C to 1300°C. In a similar way, for a material produced with setting a targeted composition of boron to be 0.05 mass%, for a material produced with setting a targeted composition of boron to be 0.10 mass%, and for a material produced with setting a targeted composition of boron to be 0.30 mass%, a relative density of approximately 100% was able to be achieved when a sintering temperature was 1240°C to 1300°C. From the result in the experiment 4 and the result in the experiment 1, the addition of boron in an amount within a prescribed range may be effective for lowering the sintering temperature of cobalt-based powder and expanding the temperature range thereof.

### (Experiment 5) - outside the scope of the invention (Experiment 5-1)

In the experiment 5, the relationship between sintering temperature and relative density was evaluated when a cobalt alloy to be used as a raw material had already contained a boron (B) ingredient (that is, boron had been alloyed). In the experiment 5, an employed cobalt alloy powder was a powder of a cobalt alloy containing 0.2 mass% boron based on the total mass of the employed cobalt alloy, and no other powder was employed as raw material powder. This cobalt alloy powder is a powder produced by atomizing a cobalt alloy material obtained by adding a boron alloy (in more detail, ferro boron) to a cobalt alloy having a composition approximately coincidental with that shown in Fig. 7 and then dissolving the alloy mixture. The ferro boron used had a composition of 17.33 mass% of B, 1 mass% of impurities (for example, C, Si, Mn, P, S) and Fe as a residue, based on the total of the ferro boron as 100 mass%. A molded body was obtained, by using the same binder and the same production temperature of a kneaded body as those in the experiment 1 and in a way similar to the experiment 1. The obtained molded body was heated as described above to thereby be degreased, and then the resultant substance was sintered at each of prescribed respective temperatures for 10 minutes. Then, relative densities of these sintered bodies were evaluated.

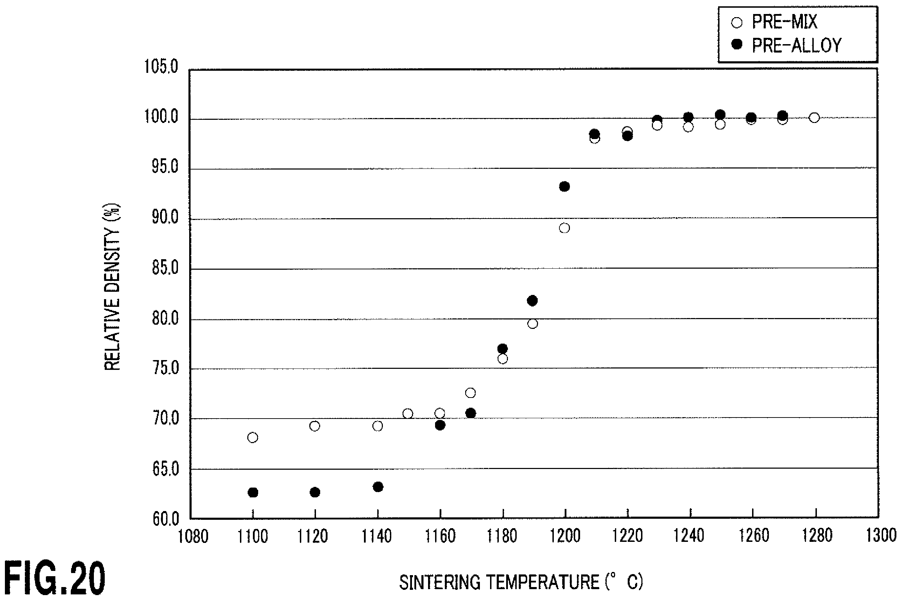

Fig. 20 shows, while plotting sintering temperature (°C) parameter on the horizontal axis and relative density (%) parameter on the vertical axis, the relationship between these parameters. In Fig. 20, results regarding the material produced by using only a cobalt alloy powder having already contained a boron ingredient are indicated as "pre-alloy." Results regarding a material produced by adding boron powder to cobalt alloy powder as shown in the experiment 1 are also shown in Fig.20 for comparison and indicated as "pre-mix" in Fig. 20. In the experiment, as for the "pre-alloy," relative densities of approximately 100% (including 100%) were able to be achieved by sintering at each of prescribed temperatures of 1210°C to 1270°C (ten-degrees C intervals). As for the "pre-mix," relative densities of approximately 100% (including 100%) were able to be achieved by sintering at each of prescribed temperatures of 1220°C to 1280°C (ten-degrees C intervals).

The experiment results would bring about such conclusion that boron lowers sintering temperature of a molded body and expands a sintering temperature range, in both cases where boron is added as a raw material (that is, a case where boron is added in the Step S1) and where boron is contained from the beginning as an ingredient in a raw material.

### (Experiment 5-2)

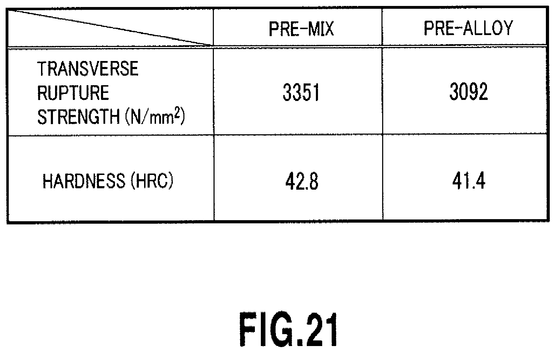

The cobalt alloy material produced in the experiment (5-1) had mechanical properties shown in Fig. 21. The results in Fig. 21 are those of materials obtained by setting sintering temperature as 1220°C. A "pre-mix" material and a "pre-alloy" material showed mechanical properties of similar level.

In this way, the boron addition has an influence on sintering conditions as described above, without deteriorating mechanical properties of the cobalt alloy material. Accordingly, it may suitably contribute to the reduction in production cost, improvement of production efficiency, and lowering of proportion defective, by obtaining a cutting member (for example, cutting tip) made from a cobalt alloy material with the boron addition.

Hereinabove, the present invention has been explained based on embodiments and experiments, but the present invention is not limited to these. The above-described cobalt alloy material may be used for other applications . For example, the cobalt alloy may be used for a sliding member of an internal-combustion engine.

## Claims

1. A method for producing a cobalt alloy material, comprising the steps of:
making a molded body by using raw material powder that includes cobalt-based powder and includes boron in an amount of 0.01 to 1.00 mass%, based on the total mass of the raw material powders; and
sintering the molded body,
wherein the raw material powder includes WC powder, and
wherein 0 to 70% not including 0, of tungsten in the raw material powder is contained as WC powder in the raw material powder.

2. The method according to claim 1, wherein the raw material powder comprises boron-based powder in an amount corresponding to 0.01 to 1.00 mass% of boron, based on the total mass of the raw material powder.

3. The method according to claim 1 or 2, wherein a powdery cobalt alloy is used as the cobalt-based powder.

4. The method according to claim 3, wherein the powdery cobalt alloy contains 28.00 to 32.00 mass% of chromium, 3.50 to 13.00 mass% of tungsten and 1.00 to 4.70 mass% of carbon, based on the total mass of the powdery cobalt alloy.

5. The method according to claim 4, wherein the powdery cobalt alloy contains 28.00 to 32.00 mass% of chromium, 3.50 to 5.00 mass% of tungsten and 1.00 to 1.40 mass% of carbon, based on the total mass of the powdery cobalt alloy.

6. The method according to any one of claims 3 to 5, wherein the powdery cobalt alloy further contains a boron ingredient and the boron ingredient is alloyed.

7. The method according to any one of claims 1 to 6, wherein the raw material powder includes carbon powder.

8. The method according to claim 7, wherein 0.01 to 3.70 mass% of carbon is contained as carbon powder in the raw material powder, based on the total mass of the raw material powders.

9. The method according to any one of claims 1 to 8, wherein the step of making the molded body includes the steps of:
making a kneaded body containing the raw material powder and a binder; and
making a molded body by injection-molding the kneaded body.

10. The method according to claim 9, further comprising the step of removing a binder from the molded body, wherein
the sintering step follows after the removing step.

11. The method according to any one of claims 1 to 10, further comprising providing the cobalt alloy material obtained via the sintering, with at least one cutting edge.

12. The method according to any one of claims 1 to 10, wherein the cobalt alloy material obtained via the sintering is provided with at least one cutting edge.

## Patentansprüche

1. Verfahren zur Herstellung eines Kobalt-Legierungs-Materials , welches die Schritte umfasst:
Herstellen eines gegossenen Körpers unter Verwendung von Rohmaterial-Pulver, das auf Cobalt-basierendes Pulver umfasst und Bor in einer Menge von 0,001 bis 1,00 Massen-% enthält, bezogen auf die Gesamtmasse des Rohmaterial-Pulvers; und
Sintern des gegossenen Körpers,
worin das Rohmaterial-Pulver WC-Pulver enthält, und worin 0 to 70 % Wolfram, 0 nicht umfasst, in dem Rohmaterial-Pulver als WC-Pulver enthalten ist.

2. Verfahren nach Anspruch 1, worin das Rohmaterial-Pulver auf Bor-basierendes Pulver in einer Menge entsprechend 0,01 bis 1,00 Massen-% Bor enthält, bezogen auf die Gesamtmasse des Rohmaterial-Pulvers.

3. Verfahren nach Anspruch 1 oder 2, worin eine pulvrige Cobalt-Legierung als das auf Cobalt-basierende Pulver verwendet wird.

4. Verfahren nach Anspruch 3, worin die pulvrige Cobalt-Legierung 28,00 bis 32,00 Massen-% Chrom, 3,50 bis 13,00 Massen-% Wolfram und 1,00 bis 4,70 Massen-% Kohlenstoff enthält, bezogen auf die Gesamtmasse der pulvrigen Cobalt-Legierung.

5. Verfahren nach Anspruch 4, worin die pulvrige Cobalt-Legierung 28,00 bis 32,00 Massen-% Chrom, 3,50 bis 5,00 Massen-% Wolfram und 1,00 bis 1,40 Massen-% Kohlenstoff enthält, bezogen auf die Gesamtmasse der pulvrigen Cobalt-Legierung.

6. Verfahren nach einem der Ansprüche 3 bis 5, worin die pulvrige Cobalt-Legierung weiter einen Bor-Inhaltsstoff enthält und worin der Bor-Inhaltsstoff legiert ist.

7. Verfahren nach einem der Ansprüche 1 bis 6, worin das Rohmaterial-Pulver Kohlenstoff-Pulver enthält.

8. Verfahren nach Anspruch 7, worin in dem Rohmaterialpulver 0,01 bis 3,70 Massen-% Kohlenstoff als Kohlenstoff-Pulver enthalten ist, bezogen auf die Gesamtmasse des Rohmaterial-Pulvers.

9. Verfahren nach einem der Ansprüche 1 bis 8, worin der Schritt der Herstellung des gegossenen Körpers die Schritte umfasst:
Herstellen eines gekneteten Körpers, der das Rohmaterial-Pulver und ein Bindemittel enthält; und
Herstellen eines gegossenen Körpers durch Spritz-Giessen des gekneteten Körpers.

10. Verfahren nach Anspruch 9, welches weiter den Schritt umfasst, Entfernen eines Binders von dem gegossenen Körper, worin der Sinter-Schritt nach dem Entfernungs-Schritt erfolgt.

11. Verfahren nach einem der Ansprüche 1 bis 10, welches weiter umfasst, Bereitstellen des durch Sintern erhaltenen Cobalt-Legierungs-Materials mit mindestens einer Schneidekante.

12. Verfahren nach einem der Ansprüche 1 bis 10, worin das durch das Sintern erhaltene Cobalt-Legierungsmaterial mit mindestens einer Schneidekante versehen ist.

## Revendications

1. Procédé de production d'un matériau d'alliage de cobalt comprenant les étapes consistant à :
préparer un corps moulé en utilisant une poudre de matières premières qui comprend une poudre à base de cobalt et qui comprend du bore en une quantité de 0,01 à 1,0 % en masse, en se basant sur la masse totale des poudres de matières premières ; et
fritter le corps moulé,
dans lequel la poudre de matières premières comprend une poudre de CW, et
dans lequel de 0 à 70 %, en n'incluant pas 0, de tungstène dans la poudre de matières premières sont contenus sous forme de poudre de CW dans la poudre de matières premières.

2. Procédé selon la revendication 1, dans lequel la poudre de matières premières comprend une poudre à base de bore en une quantité correspondant à 0,01 à 1,00 % en masse de bore, en se basant sur la masse totale de la poudre de matières premières.

3. Procédé selon la revendication 1 ou 2, dans lequel un alliage de cobalt pulvérulent est utilisé en tant que poudre à base de cobalt.

4. Procédé selon la revendication 3, dans lequel l'alliage de cobalt pulvérulent contient de 28,00 à 32,00 % en masse de chrome, de 3,50 à 13,00 % en masse de tungstène et de 1,00 à 4,70 % en masse de carbone, en se basant sur la masse totale de l'alliage de cobalt pulvérulent.

5. Procédé selon la revendication 4, dans lequel l'alliage de cobalt pulvérulent contient de 28,00 à 32,00 % en masse de chrome, de 3,50 à 5,00 % en masse de tungstène et de 1,00 à 1,40 % en masse de carbone, en se basant sur la masse totale de l'alliage de cobalt pulvérulent.

6. Procédé selon l'une quelconque des revendications 3 à 5, dans lequel l'alliage de cobalt pulvérulent contient en outre un ingrédient de bore et l'ingrédient de bore est allié.

7. Procédé selon l'une quelconque des revendications 1 à 6, dans lequel la poudre de matières premières comprend une poudre de carbone.

8. Procédé selon la revendication 7, dans lequel de 0,01 à 3,70 % en masse de carbone sont contenus sous forme de poudre de carbone dans la poudre de matières premières, en se basant sur la masse totale des poudres de matières premières.

9. Procédé selon l'une quelconque des revendications 1 à 8, dans lequel l'étape de préparation du corps moulé comprend les étapes consistant à :
préparer un corps malaxé contenant la poudre de matières premières et un liant ; et
préparer un corps moulé par moulage par injection du corps malaxé.

10. Procédé selon la revendication 9, comprenant en outre l'étape consistant à éliminer un liant du corps moulé, dans lequel l'étape de frittage suit l'étape d'élimination.

11. Procédé selon l'une quelconque des revendications 1 à 10, comprenant en outre la fourniture du matériau d'alliage de cobalt obtenu par frittage, avec au moins une arête.

12. Procédé selon l'une quelconque des revendications 1 à 10, dans lequel le matériau d'alliage de cobalt obtenu par frittage est doté d'au moins une arête.
